# FASCICULE DE BREVET EUROPEEN

(11) **EP 4 015 210 B1**
(45) Date de publication et mention de la délivrance du brevet: **06.09.2023**
(21) Numéro de dépôt: 21214465.3
(22) Date de dépôt: 14.12.2021
(51) Int. Cl.: B32B 5/02, B32B 5/08, B32B 5/14, B32B 5/16, B32B 25/00, B32B 27/08, B32B 27/12, B32B 27/14, B32B 27/30, B32B 27/32

(54) **REVETEMENT DE SOL A ENVERS TEXTILE RESILIENT A PERFORMANCE D'ATTENUATION ACOUSTIQUE ACCRUE ET A RIGIDITE AUGMENTEE**
BODENBELAG MIT ELASTISCHER TEXTILER RÜCKSEITE MIT ERHÖHTER SCHALLDÄMMLEISTUNG UND HÖHERER STEIFIGKEIT
FLOOR COVERING WITH RESILIENT TEXTILE UNDERSIDE WITH ENHANCED PERFORMANCE OF ACOUSTIC MUFFLER AND INCREASED RIGIDITY

(30) Priorité: 17.12.2020 FR 2013416
(43) Date de publication de la demande: 22.06.2022
(73) Titulaire: GERFLOR, 69100 Villeurbanne (FR)
(72) Inventeur: DUMANT, Nicolas, 84600 VALREAS (FR)
(74) Mandataire: Cabinet Laurent & Charras

(56) Documents cités:
- EP-A1- 1 867 461
- EP-A1- 3 483 358
- FR-A1- 3 082 859

## Description

### Domaine technique

La présente invention concerne une structure multicouche pour la réalisation d'un revêtement de sol de type résilient, réalisée notamment à partir d'une couche de base en PVC, linoléum, Polyoléfine ou caoutchouc.

L'invention concerne notamment ce type de structure multicouche renforcée par une couche d'isolation acoustique en textile non-tissé, positionnée sous une couche d'usure, ou bien de manière intermédiaire dans une couche d'envers, ou bien en face inférieure de la couche d'envers pour être en contact avec le sol.

Etant ainsi entendu que les structures multicouches dans lesquelles la couche d'isolation acoustique en textile non-tissé est positionnée en surface, notamment pour être au contact d'un utilisateur, ne font pas partie du cadre de l'invention.

### Art antérieur

Il est connu de l'art antérieur, et notamment du document EP1360366, une structure multicouche pour la réalisation d'un revêtement de sol, par exemple réalisée par enduction, et comportant une structure de base en matière thermoplastique, par exemple en PVC plastifié, renforcée par une armature en textile, éventuellement associée à une sous-couche en mousse et dont la face apparente est constituée par un revêtement de surface conférant le décor et la résistance à l'usure du revêtement de sol.

Selon ce document, la face envers de la structure multicouche destinée à être en contact avec le sol est constituée par une nappe textile, de préférence du type non-tissé, la liaison entre la nappe textile et la face envers du support de base étant réalisée par l'intermédiaire d'une couche additionnelle de plastisol qui pénètre, sur une partie minoritaire de l'épaisseur de la nappe textile et qui, après gélification, assure la solidarisation du textile à l'envers du support de base en matière thermoplastique.

Ce document vise à fournir une structure multicouche pour la réalisation d'un revêtement de sol qui présente des propriétés améliorées par rapport aux structures de l'art antérieur, notamment en termes de confort à la marche, d'isolation acoustique et thermique, de résistance mécanique et de planéité.

Le document EP1507920 donne une autre solution pour améliorer les propriétés d'atténuation acoustique du revêtement de sol, et enseigne notamment l'ajout d'une armature non-tissé collée, non pas par un plastisol comme décrit dans le brevet EP1360366, plutôt par poudrage.

En effet, selon le document EP1507920, la liaison entre l'armature en textile non tissé et la face envers du support de base est réalisée par l'intermédiaire d'un primaire disposé et réparti de manière discontinue entre ladite face envers et ladite armature en textile non tissé assurant leur adhérence avec une pénétration limitée dans l'épaisseur de la nappe textile afin d'autoriser le glissement des fibres de la nappe textile entre elles dans les zones de pliure du revêtement. Le primaire utilisé est notamment établi sous forme d'une poudre projetée, pulvérisée ou saupoudrée sur au moins une des faces en regard de la nappe textile ou de la face envers réceptrice.

Les deux brevets précités décrivent des revêtements de sol résilient présentant un envers textile conférant de bonnes performances d'atténuation acoustique, mais souvent au détriment de leur souplesse. Or, un revêtement résilient trop souple est plus complexe à poser et présente une résistance diminuée au test du pied de meuble conformément à la norme NF-EN-424.

Pour améliorer la rigidité du revêtement, et ainsi faciliter son opération de pose, il est possible d'ajouter une ou plusieurs couches intermédiaires renforcées comprenant une armature telle qu'un voile de verre ou une grille de verre, ou bien de diminuer la quantité de plastifiant dans les compositions des couches d'usure et de surface et/ou intermédiaires et/ou d'envers.

Cependant, l'ajout d'une ou plusieurs armatures de renfort complexifie la fabrication de la structure multicouche, et augmente son coût de revient, et la diminution du taux de plastifiant rend, quant à elle, la fabrication de la structure multicouche, en rouleau ou en dalle, complexe sur des lignes de fabrication en continu utilisant notamment des enrouleurs, accumulateurs et autres mandrins pour convoyer la structure multicouche.

Le brevet FR 3082859 A1 divulgue un autre exemple d'une structure multicouche pour la réalisation de sol comprenant un non-tissé imprégné de colle de type EVA dans moins de 50% de l'épaisseur du non-tissé.

### Exposé de l'invention

L'un des buts de l'invention est donc de remédier aux problèmes de l'art antérieur en proposant une structure multicouche pour la réalisation d'un revêtement de sol constituée d'au moins une couche d'usure décorative par exemple en PVC, linoléum, polyoléfine, ou caoutchouc, et d'une couche d'isolation acoustique en textile non-tissé, en position intermédiaire ou d'envers, dont l'opération de pose libre est facilité, tout en permettant de satisfaire la norme NF-EN-424 en termes de résistance au test du pied de meuble, ainsi que la norme ISO 717-2 en termes d'atténuation acoustique.

À cet effet, il a été mis au point une structure multicouche pour la réalisation d'un revêtement de sol comprenant au moins une couche d'usure décorative, par exemple PVC, linoléum, polyoléfine ou caoutchouc, une couche d'envers par exemple réalisée à partir d'une matière plastique, préférentiellement en PVC plastifié et une couche d'isolation acoustique en textile non-tissé, en position intermédiaire ou en contact avec le sol, dont une partie de l'épaisseur est constituée de fibres libres.

Selon l'invention, la structure multicouche comprend des particules solides sous la forme de poudre répartie, par exemple uniformément ou bien sous forme de gradient, dans au moins 50 %, et de préférence dans la totalité de l'épaisseur de la partie de la couche d'isolation acoustique constituée de fibres libres.

La présence de ces particules permet d'améliorer la rigidité de la structure multicouche, sans affecter les performances d'atténuation acoustique, et permet par conséquent d'améliorer l'aptitude du revêtement à plomber lors de la pose ce qui la rend plus aisée. Par ailleurs, étant donné que la rigidité est améliorée, la découpe et la pose en format modulaire, telles qu'en dalle ou lame, à partir d'un rouleau sont aussi facilitées.

D'autre part, les particules pouvant être ajoutées à la couche d'isolation acoustique après la fabrication de la structure multicouche de base, il est possible de différencier des produits au dernier moment, diminuant ainsi le nombre de références à stocker.

La structure multicouche de l'invention permet donc de résister au trafic, présente de bonnes performances en termes de stabilité dimensionnelle, de dilatation, de capacité à plomber, c'est-à-dire que le revêtement retrouve sa planéité naturellement après être déroulé, tout en satisfaisant la norme NF-EN-424 en termes de résistance au test du pied de meuble et la norme ISO 717-2 en termes de performances d'atténuation acoustique. En d'autres termes, la structure multicouche selon l'invention permet en fonction du mode de réalisation d'atteindre des performances d'atténuation acoustique supérieures à 15 dB selon la norme ISO 717-2 et un classement UPEC P3 selon la norme NF-EN-424.

L'objectif de l'invention se limite à la présence des particules dans au moins 50 % de l'épaisseur du textile non-tissé car il est déjà connu d'ajouter des particules de colle, par exemple polyester ou EVA, pour lier le non-tissé à la couche d'envers, tel que décrit dans le brevet critiqué de l'art antérieur n° EP1507920, au nom du Demandeur et qui décrit notamment une pénétration limitée dans l'épaisseur de la nappe textile.

Selon une forme de réalisation particulière, la partie de l'épaisseur de la couche d'isolation acoustique constituée de fibres libres comprend entre 40 g/m² et 300 g/m² de particules. Il est en effet noté qu'à moins de 40 g/m², l'effet plombant n'est pas satisfaisant et la rigidité n'est pas augmentée significativement. A contrario, en augmentant la quantité de particules jusqu'à 300 g/m² on améliore l'effet plombant. Au-delà de 300 g/m², il devient difficile de faire pénétrer les particules dans la couche d'isolation acoustique.

De préférence, les particules présentent un D50, c'est-à-dire un diamètre médian caractéristique de la distribution granulométrique, compris entre 50 µm et 150 µm. Cette granulométrie permet une bonne pénétration des particules dans la couche d'isolation acoustique, notamment pour des textiles non-tissés présentant des masses surfaciques comprises entre 40 g/m² et 300 g/m². Cette taille de particule permet également de limiter le déplacement des particules dans la couche d'isolation acoustique une fois que celles-ci ont pénétrées la couche d'isolation acoustique selon les techniques décrites dans la présente invention.

Selon une forme de réalisation particulière, la couche d'isolation acoustique en textile non-tissé seule, sans les particules, présente une masse surfacique comprise entre 40 g/m² et 300 g/m². Une couche de textile non-tissé présentant moins de 40 g/m² n'aura pas d'effet acoustique tandis que si elle présente plus de 300 g/m² elle devient difficilement manipulable sur des lignes de production en continu.

La poudre de particules utilisée est par exemple composée de particules d'Éthylène-acétate de vinyle (EVA), et/ou de particules de charges inorganiques, et/ou de particules de Copolyester, et/ou de particules creuses, et/ou de particules biosourcées ou d'un mélange de deux ou plusieurs de ces types de particules.

Les charges inorganiques pouvant être utilisées selon l'invention sont par exemple les barytes, les argiles, de la silice, de la craie, du kaolin, du talc, du carbonate de calcium. De préférence, les charges inorganiques présentent une densité supérieure à 2 g /cm3, plus préférentiellement supérieure à 3 g /cm3, encore plus préférentiellement supérieure à 4 g /cm3afin d'améliorer l'effet plombant. Les charges inorganiques telles que la baryte présentent une densité importante, supérieure à 4 g /cm3, qui permet d'apporter un très bon effet plombant et de rigidifier la structure multicouche.

Selon un exemple de mise en oeuvre, la structure multicouche selon l'invention comprend par exemple :
- une couche d'usure en PVC plastifié ;
- un voile de verre imprégné d'un plastisol PVC gélifié imprimé d'un décor ;
- une couche d'équilibrage en plastisol PVC gélifié ;
- une couche d'isolation acoustique en textile non-tissé PET comprenant des particules solides sous forme de poudre répartie uniformément dans la totalité de l'épaisseur de la couche d'isolation acoustique constituée de fibres libres.

### Description des figures

[Fig. 1] La figure 1 illustre de manière schématique la structure multicouche selon l'invention.
[Fig. 2] La figure 2 est une représentation schématique d'un exemple de réalisation de la présente invention.

### Description détaillée de l'invention

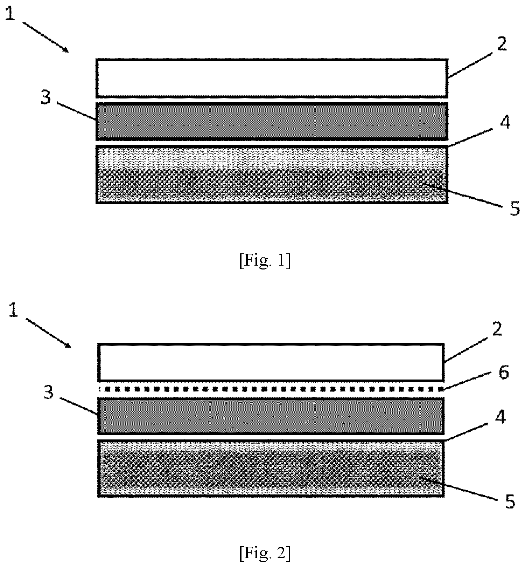

En référence à la figure 1, l'invention concerne une structure multicouche (1) pour la réalisation d'un revêtement de sol dit résilient présentant au moins, en surface, une couche d'usure décorative (2) par exemple en PVC, linoléum, polyoléfine ou caoutchouc, et une couche d'envers (3) par exemple réalisée à partir d'une matière plastique, notamment en PVC plastifié ), renforcée par une couche d'isolation acoustique (4) en textile non-tissé, positionnée sous la couche d'usure (2), ou bien de manière intermédiaire dans la couche d'envers (3), ou bien en face inférieure de la couche d'envers (3) pour être en contact avec le sol.

Selon l'invention, la couche d'usure décorative (2) présente par exemple une épaisseur comprise entre 0,1 et 1 mm, plus préférentiellement entre 0,3 et 0,7 mm. La couche d'usure décorative (2) peut être transparente à la lumière visible de manière à ce qu'un décor imprimé en envers de la couche d'usure décorative (2), en surface de la couche d'envers (43), sur un film disposé entre la couche d'usure (2) et la couche d'envers (3) ou encore imprimé sur un voile de verre (6) imprégné de plastisol gélifié disposé entre la couche d'usure (2) et la couche d'envers (3) puisse être visible au travers de la couche d'usure (2).

Selon l'invention, la couche d'envers (3) peut être réalisée à partir de matière plastique, de préférence thermoplastique, telle que du PVC plastifié. D'autres matières plastiques pouvant être utilisées sont notamment du polypropylène, du polyuréthane, du polyuréthane thermoplastique, du polyéthylène, du polyéthylène téréphtalate, ou tout autre matière plastique appropriée. La couche d'envers comprend éventuellement des charges sous forme de fibres, copeaux, poussières ou sciure de bois et/ou des charges inorganiques, par exemple carbonate de calcium, craie, chaux, talc, et un ou plusieurs plastifiants afin de définir la rigidité de la couche d'envers. La couche d'envers peut être obtenue par calandrage, extrusion, pressage, ou préférentiellement par enduction de plastisol. Selon l'invention, la couche d'envers (3) présente par exemple une épaisseur comprise entre 0,2 et 1,5 mm, plus préférentiellement entre 0,3 et 1 mm.

Selon l'invention, au moins une partie de l'épaisseur de la couche d'isolation acoustique (4) en textile non tissé présente des fibres libres, c'est-à-dire des fibres non noyées dans un liant ou une autre couche. De façon particulière, il est envisageable au sens de l'invention que tout ou partie des particules solides comprises dans la couche d'isolation acoustique soient soumises à une étape de chauffe pour les lier avec une partie des fibres de textile non tissé. Ceci est notamment possible avec des particules thermofusibles telles que des particules Éthylène-acétate de vinyle (EVA). Cependant, même si des fibres sont ainsi liées avec tout ou partie des particules solides, la couche d'isolation acoustique présente toujours des fibres libres de manière à conserver des poches d'air et un bon niveau d'atténuation acoustique. De manière essentielle, il est à noter que les structures multicouches dans lesquelles la couche d'isolation acoustique en textile non-tissé est positionnée en surface, c'est-à-dire pour être au contact d'un utilisateur, ne font pas partie du cadre de l'invention.

L'invention concerne une structure multicouche (1) dont la pose libre, c'est-à-dire sans colle, est facilitée, satisfaisant la norme NF-EN-424 en termes de résistance au test du pied de meubles, et dont les performances d'atténuation acoustique sont améliorées et satisfont la norme ISO 717-2.

La structure multicouche (1) selon l'invention permet de fournir un revêtement de sol résistant au trafic, avec une bonne stabilité dimensionnelle, une bonne dilatation, et une bonne capacité à plomber, pour obtenir selon certains modes de réalisation le classement UPEC P3 selon la norme en vigueur bien connue de l'homme du métier.

Pour cela, des particules solides (5) sous forme de poudre sont réparties, par exemple uniformément ou bien sous forme de gradient, dans au moins 50 %, et de préférence dans la totalité, de l'épaisseur de la partie de la couche d'isolation acoustique (4) constituée de fibres libres. Les particules sont préférentiellement réparties à partir de la face de la couche d'isolation acoustique (4) en regard avec le sol, ceci permettant d'obtenir un meilleur effet plombant. Il est possible que les particules soient réparties à partir de la face de la couche d'isolation acoustique (4) en regard avec la couche d'envers (3) mais cela implique de procéder à l'imprégnation des particules dans la couche d'isolation acoustique (4) avant de la lier au reste de la structure multicouche (1).

En d'autres termes, si 90 % de l'épaisseur de la couche d'isolation acoustique (4) en textile non-tissé sont constitués de fibres libres, au moins 50 % de cette épaisseur (des 90%) constituée de fibres libres présentent des particules solides (5).

De préférence, la partie de l'épaisseur de la couche d'isolation acoustique (4) constituée de fibres libres comprend entre 40 g/m² et 300 g/m² de particules (5).

Les particules (5) présentent par exemple un D50, c'est-à-dire un diamètre médian caractéristique de la distribution granulométrique, compris entre 50 µm et 150 µm afin de faciliter leur imprégnation dans une couche d'isolation acoustique en textile non-tissé. La poudre de particules (5) peut être composée de particules d'Éthylène-acétate de vinyle (EVA), et/ou de charges inorganiques, par exemple de Baryte, et/ou de particules de Copolyester, et/ou de particules creuses comprenant un gaz, expansible ou non, par exemple du type de celles commercialisées sous la marque déposée « Expancel », ou d'un mélange de deux ou plusieurs de ces types de particules. Les particules creuses permettent d'apporter du poids à la couche d'isolation acoustique (4) tout en améliorant l'atténuation acoustique de la structure multicouche. La poudre de particules solides (5) comprend éventuellement également des charges inorganiques. Les charges pouvant être utilisées selon l'invention sont notamment des charges inorganiques, par exemple des particules de barytes, d'argiles, de la silice, de la craie, du kaolin, du talc ou encore du carbonate de calcium. La poudre de particules solides (5) comprend éventuellement également des particules biosourcées. Les particules biosourcées pouvant être utilisées selon l'invention sont notamment des particules comprenant du bois, du liège, y compris issues de déchets recyclés.

La couche d'isolation acoustique (4) en textile non-tissé est notamment obtenue à partir de polyester, de polyamide, de polyéthylène téréphtalate, de polypropylène et/ou une combinaison de ces fibres,
La poudre de particules (5) est incorporée dans l'épaisseur de la couche d'isolation acoustique (4) en textile non-tissé constituée de fibres libres, par toute technique appropriée, par exemple :
- au moyen d'une pompe à vide ;
- par mise en vibration mécanique du textile non-tissé lui-même, sur lequel la poudre est déposée par un système vibrant quelconque ; les secousses permettent alors de faire pénétrer plus ou moins profondément ladite poudre ;
- par l'utilisation d'un champ électrostatique, cette technique étant préférée car permettant d'obtenir une bonne pénétration des particules dans une couche d'isolation acoustique (4) en textile non-tissé déjà présente en envers d'une structure multicouche (1) ;
- par la mise en vibration ultrasonore, simultanément avec l'application de la poudre, en utilisant un générateur ultrason faisant vibrer une sonotrode ; lorsque le textile non-tissé défile sous la sonotrode, l'action de ladite sonotrode mais les particules (5) en vibration et celles-ci peuvent alors pénétrer dans les interstices entre les fibres libres du textile non-tissé.

De cette manière, la rigidité de la couche d'isolation acoustique (4) en textile non-tissé est augmentée, tout en conservant les propriétés d'atténuation acoustique. La couche d'isolation acoustique (4) en textile non-tissé présente par exemple une masse surfacique comprise entre 40 g/m² et 300 g/m².

Lors du procédé de fabrication, il est possible d'incorporer la poudre de particules (5) dans une couche d'isolation acoustique (4) séparée en textile non-tissé, puis de lier ladite couche d'isolation acoustique (4) à une couche d'envers (3) ou une couche d'usure décorative (2). En alternative, il est possible d'incorporer directement la poudre de particules (5) dans une couche d'isolation acoustique (4) en textile non-tissé déjà présente en envers d'une structure multicouche (1) déjà réalisée. La découpe de la structure multicouche (1) au format modulaire, c'est-à-dire en dalles ou en lames, peut se faire ensuite en aval sur un procédé standard de découpe, notamment par emporte-pièce.

Des tests ont été réalisés avec trois produits de configurations similaires, dont un Produit n°1 comprenant une couche d'isolation acoustique en textile non-tissé dépourvue de poudre de particules, et des Produits n°2 et n°3 comprenant des types différents de particules (5) incorporées dans l'épaisseur de la couche d'isolation acoustique (4) en textile non-tissé constituée de fibres libres.

Notamment, le Produit n°1 d'une épaisseur de 3,65 mm, comprend :
- une couche d'usure (2) en PVC plastifié, par exemple de 0,35 mm ;
- un voile de verre (6) imprégné d'un plastisol PVC gélifié, puis imprimé d'un décor, l'ensemble faisant 0,7 mm d'épaisseur ;
- une couche d'envers (3) compacte et d'équilibrage obtenue à partir d'un plastisol PVC gélifié de 0,6 mm d'épaisseur ;
- une couche d'isolation acoustique (4) en textile non-tissé en PET de 250 g/m².

Pour le Produit n°1, la couche d'isolation acoustique (4) en textile non-tissé ne comprend pas de particules solides (5). L'envers de la couche d'isolation acoustique (4) en textile non-tissé est collé avec une colle polyester.

Le Produit n°2, illustrée par exemple à la figure 2, comprend une structure similaire au Produit n°1, à l'exception de la couche d'isolation acoustique (4) en textile non-tissé qui incorpore une poudre de particules solides (5) réparties uniformément dans toute son épaisseur constituée de fibres libres. Lesdites particules (5) ont été incorporées au moyen d'un champ électrostatique.

Dans le Produit n°2, les particules (5) sont en copolyester et présentent un diamètre médian de 80 µm, et la couche d'isolation acoustique (4) en textile non-tissé comprend 96 g/m² de particules (5).

Le Produit n°3 comprend une structure similaire à celle du Produit n°2, à l'exception du fait que les particules (5) incorporées dans l'épaisseur de la couche d'isolation acoustique (4) sont, pour 2%, des particules (5) commercialisées sous la marque déposée « Expancel », référence 930DU120, et pour 98%, des particules (5) de copolyester d'un diamètre médian de 80 µm. La couche d'isolation acoustique (4) en textile non-tissé comprend 98 g/m² de particules (5).

Une mesure des performances d'atténuation acoustique a été réalisée pour chacun des Produit n°1, n°2 et n°3, notamment avec un appareil Mac BK selon la norme ISO 717-2, sur un revêtement en pose libre à 21,3 °C.

Pour le Produit n°1, une atténuation acoustique de 16 dB a été mesurée. Pour les Produits n°2 et n°3 une atténuation acoustique de 17 dB a été mesurée.

D'autres tests ont ensuite été réalisés avec d'autres Produits pour mesurer la résistance au poinçonnement pendant une durée de 2h30, de 24 heures et d'une semaine, ainsi qu'une mesure au torsiomètre à 23 °C, avec un angle de 135°. Les résultats sont compilés dans le tableau ci-dessous.

**Tableau 1]**

| | Poudre CoPes 0-80µm | Grammage de poudre | Poinçonnement 2h30 | Poinçonnement 24hr | Poinçonnement 1 semaine | Torsiomètre 23°C,α :135° |
|---|---|---|---|---|---|---|
| | | g/m² | Mm | Mm | Mm | N.m |
| Produit n°1 | / | / | 0,2 | 0,16 | 0,17 | 0,12 |
| Produit n°4 | 100% CoPES | 90 | 0,13 | 0,09 | 0,07 | 0,19 |
| Produit n°5 | 100% CoPES | 150 | 0,16 | 0,11 | 0,09 | 0,23 |

Le Produit n°4 comprend une structure similaire à celle du Produit n°2, à l'exception du fait que la couche d'isolation acoustique (4) en textile non-tissé comprend 90 g/m² de particules (5) de copolyester d'un diamètre médian de 80 µm.

Le Produit n°5 comprend une structure similaire à celle du Produit n°2, à l'exception du fait que la couche d'isolation acoustique (4) en textile non-tissé comprend 150 g/m² de particules (5) de copolyester d'un diamètre médian de 80 µm.

On constate que le poinçonnement diminue avec l'ajout de poudre, et une perte de souplesse (torsiomètre) de 20 à 50 % avec l'ajout de poudre dans la couche d'isolation acoustique (4) en textile non-tissé, ce qui traduit un meilleur effet plombant obtenu pour le revêtement selon l'invention.

Il ressort de ce qui précède que l'invention fournit bien une structure multicouche (1) pour la réalisation d'un revêtement de sol constituée d'au moins une couche d'usure décorative (2) par exemple en PVC, linoléum, polyoléfine, ou caoutchouc, et d'une couche d'isolation acoustique (4) en textile non-tissé, en position intermédiaire ou d'envers, dont l'opération de pose libre est facilité, tout en permettant de satisfaire la norme NF-EN-424 en termes de résistance au test du pied de meuble, ainsi que la norme ISO 717-2 en termes d'atténuation acoustique.

## Revendications

1. Structure multicouche (1) pour la réalisation d'un revêtement de sol comprenant au moins une couche d'usure décorative (2), une couche d'envers (3) et une couche d'isolation acoustique (4) en textile non tissé dont une partie de l'épaisseur est constituée de fibres libres, **caractérisée en ce qu'**elle comprend des particules solides (5) sous forme de poudre réparties dans au moins 50% de l'épaisseur de la partie de la couche d'isolation acoustique (4) constituée de fibres libres.

2. Structure multicouche (1) selon la revendication 1, **caractérisée en ce que** les particules solides (5) sont réparties uniformément ou sous forme de gradient.

3. Structure multicouche (1) selon l'une des revendications précédentes, **caractérisée en ce que** la couche d'isolation acoustique (4) en textile non tissé est positionnée en face inférieure de la couche d'envers (3) pour être en contact avec le sol.

4. Structure multicouche (1) selon l'une des revendications précédentes, **caractérisée en ce que** les particules solides (5) sous forme de poudre comprennent des charges inorganiques, par exemple de Baryte.

5. Structure multicouche (1) selon l'une des revendications précédentes, **caractérisée en ce qu'**elle comprend des particules solides (5) sous forme de poudre réparties dans la totalité de l'épaisseur de la partie de la couche d'isolation acoustique (4) constituée de fibres libres.

6. Structure multicouche (1) selon l'une des revendications précédentes, **caractérisée en ce que** la partie de l'épaisseur de la couche d'isolation acoustique (4) constituée de fibres libres comprend entre 40 g/m² et 300 g/m² de particules (5).

7. Structure multicouche (1) selon l'une des revendications précédentes, **caractérisée en ce que** les particules (5) présentent un diamètre médian compris entre 50 µm et 150 µm.

8. Structure multicouche (1) selon l'une des revendications précédentes, **caractérisée en ce que** la couche d'isolation acoustique (4) en textile non-tissé seule, sans les particules (5), présente une masse surfacique comprise entre 40 g/m² et 300 g/m².

9. Structure multicouche (1) selon l'une des revendications précédentes, **caractérisée en ce que** la poudre est composée de particules (5) d'Éthylène-acétate de vinyle (EVA), et/ou de particules (5) de Copolyester, et/ou de particules (5) creuses, ou d'un mélange de deux ou plusieurs de ces types de particules (5).

10. Structure multicouche (1) selon l'une des revendications précédentes, **caractérisée en ce qu'**elle comprend :
- une couche d'usure (2) en pvc plastifié ;
- un voile de verre (6) imprégné d'un plastisol pvc gélifié imprimé d'un décor ;
- une couche d'envers (3) et d'équilibrage en plastisol pvc gélifié ;
- une couche d'isolation acoustique (4) en textile non tissé en polytéréphtalate d'éthylène comprenant des particules solides (5) sous forme de poudre réparties uniformément dans la totalité de la partie de la couche d'isolation acoustique (4) constituée de fibres libres.

## Patentansprüche

1. Mehrschichtige Struktur (1) zur Herstellung einer Bodenbelags bestehend aus zumindest einer dekorativen Nutzschicht (2), einer Rückseite (3) und einer akustischen Isolationsschicht (4) aus Vliesstoff, wobei ein Teil der Dicke aus freien Fasern besteht, **gekennzeichnet dadurch, dass** sie feste Partikel (5) in Pulverform enthält, die in zumindest 50 % der Dicke des Teils der akustischen Isolationsschicht (4), der aus freien Fasern besteht, verteilt sind.

2. Mehrschichtige Struktur (1) nach Anspruch 1, **gekennzeichnet dadurch, dass** die festen Partikel (5) gleichmäßig oder gradientenförmig verteilt sind.

3. Mehrschichtige Struktur (1) nach einem der vorherigen Ansprüche, **gekennzeichnet dadurch, dass** die akustische Isolationsschicht (4) aus Vliesstoff auf der Unterseite der Rückseite (3) positioniert ist, um mit dem Boden in Kontakt zu sein.

4. Mehrschichtige Struktur (1) nach einem der vorherigen Ansprüche, **gekennzeichnet dadurch, dass** die festen Partikel (5) in Pulverform anorganische Füllstoffe enthalten, zum Beispiel Baryte.

5. Mehrschichtige Struktur (1) nach einem der vorherigen Ansprüche, **gekennzeichnet dadurch, dass** sie feste Partikel (5) in Pulverform enthält, die in der gesamten Dicke des Teils der akustischen Isolationsschicht (4), der aus freien Fasern besteht, verteilt sind.

6. Mehrschichtige Struktur (1) nach einem der vorherigen Ansprüche, **gekennzeichnet dadurch, dass** der Teil der Dicke der akustischen Isolationsschicht (4), der aus freien Fasern besteht, zwischen 40 g/m² und 300 g/m² an Partikeln (5) enthält.

7. Mehrschichtige Struktur (1) nach einem der vorherigen Ansprüche, **gekennzeichnet dadurch, dass** die Partikel (5) einen mittleren Durchmesser zwischen 50 µm und 150 µm haben.

8. Mehrschichtige Struktur (1) nach einem der vorherigen Ansprüche, **gekennzeichnet dadurch, dass** die akustische Isolationsschicht (4) aus Vliesstoff allein, ohne die Partikel (5), eine Flächengewicht zwischen 40 g/m² und 300 g/m² aufweist.

9. Mehrschichtige Struktur (1) nach einem der vorherigen Ansprüche, **gekennzeichnet dadurch, dass** das Pulver aus Partikeln (5) aus Ethylen-Vinylacetat (EVA) und/oder Partikeln (5) aus Copolyester und/oder hohlen Partikeln (5) besteht oder eine Mischung aus zwei oder mehr dieser Partikeltypen (5) umfasst.

10. Mehrschichtige Struktur (1) nach einem der vorherigen Ansprüche, **gekennzeichnet dadurch, dass** sie umfasst:
• eine Nutzschicht (2) aus plastifiziertem PVC;
• einen Glasvlies (6), der mit einem gelifierten PVC-Plastisol imprägniert ist und mit einem Dekor bedruckt ist;
• eine Rückseite (3) und eine Ausgleichsschicht aus gelifiertem PVC-Plastisol;
• eine akustische Isolationsschicht (4) aus Vliesstoff aus Polyethylenterephthalat, die feste Partikel (5) in Pulverform enthält, die gleichmäßig in der gesamten Dicke des Teils der akustischen Isolationsschicht (4), der aus freien Fasern besteht, verteilt sind

## Claims

1. Multilayer structure (1) for the production of a floor covering comprising at least one decorative wear layer (2), an underside layer (3), and an acoustic insulation layer (4) made of non-woven textile, wherein a part of the thickness is composed of free fibers, **characterized in that** it comprises solid particles (5) in the form of powder distributed in at least 50% of the thickness of the part of the acoustic insulation layer (4) made of free fibers.

2. Multilayer structure (1) according to claim 1, **characterized in that** the solid particles (5) are uniformly or gradiently distributed.

3. Multilayer structure (1) according to any of the preceding claims, **characterized in that** the acoustic insulation layer (4) made of non-woven textile is positioned on the underside of the underside layer (3) to be in contact with the floor.

4. Multilayer structure (1) according to any of the preceding claims, **characterized in that** the solid particles (5) in the form of powder comprise inorganic fillers, for example, Baryte.

5. Multilayer structure (1) according to any of the preceding claims, **characterized in that** it comprises solid particles (5) in the form of powder distributed throughout the thickness of the part of the acoustic insulation layer (4) made of free fibers.

6. Multilayer structure (1) according to any of the preceding claims, **characterized in that** the part of the thickness of the acoustic insulation layer (4) made of free fibers comprises between 40 g/m² and 300 g/m² of particles (5).

7. Multilayer structure (1) according to any of the preceding claims, **characterized in that** the particles (5) have a median diameter between 50 µm and 150 µm.

8. Multilayer structure (1) according to any of the preceding claims, **characterized in that** the acoustic insulation layer (4) made of non-woven textile alone, without the particles (5), has a surface mass between 40 g/m² and 300 g/m².

9. Multilayer structure (1) according to any of the preceding claims, **characterized in that** the powder is composed of particles (5) of Ethylene-vinyl acetate (EVA), and/or particles (5) of Copolyester, and/or hollow particles (5), or a mixture of two or more of these types of particles (5).

10. Multilayer structure (1) according to any of the preceding claims, **characterized in that** it comprises:
• a wear layer (2) made of plasticized PVC;
• a glass veil (6) impregnated with a gelified PVC plastisol and printed with a decorative pattern;
• an underside layer (3) and balance layer made of gelified PVC plastisol;
• an acoustic insulation layer (4) made of non-woven textile of polyethylene terephthalate containing solid particles (5) in the form of powder distributed uniformly throughout the thickness of the part of the acoustic insulation layer (4) made of free fibers.
